(19) Europäisches Patentamt
European Patent Office
Office européen des brevets

(11) Publication number: **0 161 021**
**B1**

(12) **EUROPEAN PATENT SPECIFICATION**

(45) Date of publication of patent specification: **07.06.89**

(51) Int. Cl.[4]: **C 08 C 19/44,** C 08 F 8/00

(21) Application number: **85200560.2**

(22) Date of filing: **12.04.85**

(60) **Divisional application 86200450 filed on 20.03.86.**

(54) **Method for the termination of living polymers and compounds suitable to that purpose.**

(30) Priority: **18.04.84 IT 2058884**

(43) Date of publication of application:
**13.11.85 Bulletin 85/46**

(45) Publication of the grant of the patent:
**07.06.89 Bulletin 89/23**

(84) Designated Contracting States:
**AT BE CH DE FR LI NL**

(56) References cited:
**US-A-3 855 189**
**US-A-4 284 741**

**JOURNAL OF THE CHEMICAL SOCIETY, Section C, 1967, pp. 830-840, The Chemical Society, Letchworth GB, P. CHINI et al.: "Cyclisation of 2-methylbut-3-yn-2-01. Part I. Cyclisation to aromatic compounds"**

**The file contains technical information submitted after the application was filed and not included in this specification**

(73) Proprietor: **ENICHEM ELASTOMERI S.p.A.**
**Via Ruggero Settimo 55**
**I-90139 Palermo (IT)**

(72) Inventor: **Roggero, Arnaldo**
**Via Libertà 72**
**I-20097 S. Donato Milanese Milan (IT)**
Inventor: **Salvatori, Tito**
**Via Agadir 16**
**I-20097 S. Donato Milanese Milan (IT)**

(74) Representative: **Roggero, Sergio et al**
**Ing. Barzanò & Zanardo Milano S.p.A. Via Borgonuovo 10**
**I-20121 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 161 021 B1**

**Description**

This invention relates to a method for terminating living macroanions deriving from the anionic polymerization of diene- and/or vinylaromatic monomers.

Anionic polymerization, if correctly conducted, provides living polymers which can subsequently and appropriately be transformed. (M. Szwarc, Carbanions, Living Polymers and El. Transfer Processes, Interscience Publishers, J. Wiley & Sons, New York, (1968)).

One of such transformations is the well known coupling reaction, which makes it possible to introduce, via a comparatively simple procedure, significant changes in the properties of the end polymerizates.

In the case of diene polymerization, for instance, it becomes possible to increase the Mooney viscosity, to reduce the cold flow, to increase the green tensile strength and also to modify the distribution of the molecular weights as desired.

When preparing block polymers of the A—B type, wherein A is an aromatic polyvinyl- and/or polyisopropenyl sequence, and B is an optionally hydrogenated diene sequence, using an efficient coupling agent is a must, since possible unreacted AB groups in the polymerizate worsen the physical and chemical properties of the end product.

Examples of coupling agent of the kind referred to above are widely reported in the literature: for instance, in H. L. Hsieh, Rubber Chem. and Techn., 49, (5), 1305, (1976). We have found that outstandingly effective coupling agents are those compounds which contain a cyclooctatetraene ring to which, inter alia, isopropenyl groups are bonded.

More particularly, the present invention provides a method for terminating living macroanions deriving from the anionic polymerization of diene- and/or vinylaromatic monomers, characterized by comprising the step of introducing, into the mixture being polymerized, optionally together with a polar activator, an effective coupling amount of a coupling agent having the formula:

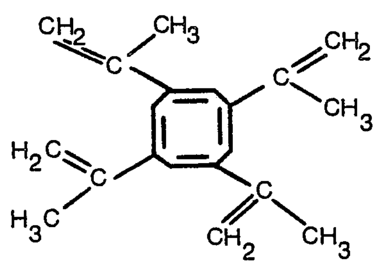

(A4)

1,3,5,7-tetra-isopropenyl-cyclo-octatetraene said effective coupling amount, $m_{AC}$, being molarly expressed by the formula:

$$m_{AC} = \frac{m_{CA}}{f_{AC}}$$

wherein $m_{CA}$ is the number of moles of active centres in the living macroanion to be terminated, and $f_{AC}$ is the number of isopropenyl functions in the coupling agent concerned, at a temperature between 50°C and 150°C.

By so doing, considerable advantages over the prior art can be achieved, namely:

— the coupling reaction can take place, in some cases, without the help of activators;

— no by-products are formed, since an addition reaction takes place, rather than an elimination reaction.

A number of cyclooctatetraene compounds, to whose class the coupling agents in question belong, have been prepared by cyclisation of 2-Methylbut-3-yn-2-ol and subsequent dehydration of the intermediate cyclo-octatetraenic alcohols, by P. Chini and co-workers, J.Chem.Soc.(C), 1967, (836—840).

Typical compounds of that class are:

1,2,4,6-Tetrakis(1-hydroxy-1-methylethyl)cyclooctatetraene, which, by dehydration, gives 5,7-Di-isopropenyl-1,1,3,3-tetramethyl-1H,3H-cyclo-octa[c]furan (coupling agent $A_1$);

1,2,4,7-Tetrakis(1-hydroxy-1-methylethyl)cyclo-octatetraene, which, by dehydration, gives 5,8-Di-isopropenyl-1,1,3,3-tetramethyl-1H,3H-cyclo-octa[c]furan (coupling agent $A_2$), and

1,3,5,7-Tetrakis(1-hydroxy-1-methylethyl)cyclo-octatetraene, which, by dehydration, gives 1,3,5,7-Tetrakis(isopropenyl)cyclo-octatetraene (coupling agent $A_4$).

These compounds, as outlined above, are very efficient coupling compounds for the purposes specified.

The conjugated dienes to be polymerized contain from 4 to 12 C-atoms, preferably from 4 to 8 C-atoms, and examples are: 1,3-butadiene, isoprene, 2,3-dimethyl-butadiene, piperylene, 3-butyl-1,3-octadiene and 2-phenyl-1,3-butadiene.

The vinylaromatic monomers contain from 8 to 20 carbon atoms and preferably from 8 to 14 carbon atoms. Typical examples are: styrene, α-methylstyrene, 1-vinylnaphtalene, 2-vinylnaphtalene, 2-isopropenyl-naphtalene, p-phenyl-styrene, 3-methyl-styrene, α-methyl-p-methylstyrene, and p-cyclohexylstyrene.

The conjugated dienes and/or vinylaromatic monomers may be polymerized singly or as mixtures, or sequentially to form homopolymers, random copolymers and block copolymers.

The polymerization is carried out in solution, at temperatures comprised between −100 and +200°C and preferably between 0 and 110°C and under a pressure which is the pressure of the system under the used temperature conditions, but no contrary directions exist against higher or lower pressures.

Suitable solvents comprise paraffinic, cycloparaffinic and aromatic hydrocarbons. Typical examples are cyclohexane, hexane, pentane, heptane, isooctane, benzene, toluene and mixtures thereof.

It is known that small amounts of polar compounds may be added to the solvent to the purpose of obtaining, in the polymerization of the diene monomer, a 1,2-configuration, or in order to increase the efficiency of the initiator in case of polymerization of vinylaromatic monomers.

The initiators are the typical anionic initiators used to this purpose.

Preferably, the organometallic compounds of formula R—Me are used, wherein R is an aliphatic, cycloaliphatic or aromatic hydrocarbon radical and Me is an alkali metal, preferably lithium.

The amount of initiator used is a function of the polymer molecular weight which one wants to obtain. The polymerization is carried out under such conditions, as to secure the living characteristics of the polymer obtained (M. Szwarc, Carbanions, Living Polymers and El. Transfer Processes, Interscience Publishers, J. Wiley & Sons, New York 1968).

The coupling agent may be introduced into the reaction medium in any way, either as a single adding, or as a plurality of partial additions, and at the time wanted. It is preferably introduced at the end of the polymerization in the desired amount.

The molar amount of coupling agent ($m_{AC}$) to be added is given by the formula:

$$m_{AC} = \frac{m_{CA}}{f_{AC}}$$

wherein:

$m_{CA}$ = Moles of active centres of living polymer

$f_{AC}$ = Coupling agent functionality.

The amount of coupling agent which is used conditions the coupling yields: obviously, a stoichiometric ratio between the polymer active centre and the coupling agent centre (taking into account its functionality) favours the highest yield.

The temperature at which the coupling reaction is carried out depends on the type of agent used, on the type of polymer undergoing the reaction and on other parameters, e.g., on the reaction medium; it can generally vary from 50° to 150°C, but is preferably comprised between 60 and 120°C.

The contact times are comprised within the range of from some minutes to some hours: times of from 10 minutes to 2 hours are preferably used.

Sometimes also polar activators may be used, which increase the coupling rate: in the case for the more active coupling compounds herein claimed, the use of such activators is not required.

The solvents are those used in the polymerization.

The coupling reaction is carried out under a pressure which is the pressure of the system at working temperature, but higher or lower pressures can be used as well.

Example 1

The polymerization and the coupling are carried out in a reaction vessel of 1 litre of capacity, equipped with stirrer, pressure gauge, termocouple sheath, and inlet for introducing the reactants and the inert gas.

In the order mentioned, 500 $cm^3$ of anhydrous cyclohexane, 12 g of styrene and 1.0 mmol of Li-sec.butyl are charged, it being allowed the polymerization to proceed over about 1 hour at 60°C. At the end, 30 g of butadiene are added, and the polymerization is complete at 60°C in about 1 hour. An extremely small aliquot part of this polymer is isolated, and sent to the different analyses. At 96°C are then injected 0.45 mmol of a solution of compound $A_1$ in cyclohexane.

After 30 minutes the polymer solution, to which 1 g of antioxidant has been added, is coagulated with an excess of methanol, about 42 g of polymer being obtained, which is dried at 60°C for 15 hours under vacuum.

The characteristics of the polymers before and after the coupling reaction are reported in Table 1:

TABLE 1

| | a) | | b) | | c) | | d) |
|---|---|---|---|---|---|---|---|
| | Composition % by weight | | Molecular Weight g/mol | | | | |
| Sample | STY | BUT | $\overline{Mw}$ | $\overline{Mn}$ | Polydispersion index | Gel % | Coupling efficiency % |
| A—B | 30 | 70 | 54.000 | 49.600 | 1.09 | 0 | = |
| A—B—A | 30 | 70 | 124.000 | 94.600 | 1.27 | 0 | $\geq$90 |

Notes:
a) Via N.M.R.
b) From G.P.C. measurements according to the procedure described by L. H. Tung: J. Appl. Polym. Sci., 24, 953 (1979).
c) Defined as $\overline{Mw/MN}$ ratio
d) Defined as the ratio, measured via GPC, of the peak area relevant to the polymer after the coupling reaction (A—B—A) to the peak area of the polymer before the coupling reaction (A—B).

The A—B—A— polymer of Example 1 shows the following technological properties:
Elongation: 900%
Tensile strength: 26 MPa.
whereas the corresponding A—B polymer, at the same elongation shows a tensile strength of about 3 MPa.

If instead of $A_1$, dichlorodiphenylsilane is used as the coupling agent, under the same experimental conditions, the coupling efficiency is 10% lower.

Example 2

Into the reaction vessel described in Example 1, 50 g of α-methylstyrene and 1.2 mmol of Li-sec.butyl are charged, polymerizing at 20°C for 1 hour and 15 minutes. At the end, 5 g of butadiene are introduced, allowing the products to react for 15 min and then 500 $cm^3$ of cyclohexane with 25 g of butadiene are introduced, the reaction being allowed to proceed at 60°C for 1 hour. A small sample is drawn and 0.45 mmol of $A_2$ are then injected, the coupling reaction being conducted at the temperature of 95°C for 30 minutes. In the usual way a polymer (43 g) is isolated, which shows the properties described in Table 2, wherein also the properties of the product A—B are reported.

TABLE 2

| | a) | | b) | | c) | | d) |
|---|---|---|---|---|---|---|---|
| | Composition % by weight | | Molecular Weight g/mol | | | | |
| Sample | α-STY | BUT | $\overline{Mw}$ | $\overline{Mn}$ | Polydispersion index | Gel % | Coupling efficiency % |
| A—B | ~30 | 70 | 49.000 | 44.000 | 1.12 | 0 | = |
| A—B—A | ~30 | 70 | 118.000 | 86.000 | 1.37 | 0 | >90 |

Notes: see Table 1.

Example 3

Example 1 is repeated, with the difference that 1,5 mmol of Li-sec.butyl is used, together with 0,33 mmol of the coupling agent $A_4$ and the reaction time is 1 hour at 110°C. The results are shown on Table 3.

TABLE 3

| | a) | | b) | | c) | d) | |
|---|---|---|---|---|---|---|---|
| | Composition % by weight | | Molecular Weight g/mol | | | | |
| Sample | STY | BUT | $\overline{Mw}$ | $\overline{Mn}$ | Polydispersion index | Gel % | Coupling efficiency % |
| A—B | 30 | 70 | 30.000 | 28.000 | 1.06 | 0 | = |
| A—B—A | 30 | 70 | 152.000 | 110.000 | 1.38 | 0 | ~90 |

Notes: See Table 1.

Example 4

Eight grams of styrene with 500 $cm^3$ of cyclohexane and 1.0 mmol of Li-sec.butyl are charged, allowing the polymerization to occur at 60°C over about 1 hour. Thirty-two grams of isoprene are added and the reaction is conducted as described in Example 1, by adding 0.45 mmol of $A_1$ and isolating the polymer (40 g).

The data pertaining to the products A—B and A—B—A are reported in Table 4.

TABLE 4

| | a) | | b) | | c) | d) | |
|---|---|---|---|---|---|---|---|
| | Composition % by weight | | Molecular Weight g/mol | | | | |
| Sample | STY | BUT | $\overline{Mw}$ | $\overline{Mn}$ | Polydispersion index | Gel % | Coupling efficiency % |
| A—B | 20 | 80 | 49.500 | 45.000 | 1.1 | 0 | = |
| A—B—A | 20 | 80 | 119.000 | 88.000 | 1.35 | 0 | ~85 |

Notes: See Table 1.

Example 5

In the same reaction equipment as in preceding Examples, about 40 g of butadiene are polymerized at 60°C for about 1 hour with 1 mmol of Li-sec.butyl in about 400 $cm^3$ of cyclohexane. At the end, a mixture of $A_1$ (0.225 mmol) and $A_4$ (0.125 mmol) is added, allowing the reaction to proceed over 30 at 100°C. The G.P.C. diagram of the isolated polymer reveals the presence of peaks of the products with different coupling degree, and with a wider molecular weight distribution than that of A—B polymer.

## Claims

1. Method for terminating living macroanions deriving from the anionic polymerization of diene- and/or vinylaromatic monomers, characterized by comprising the step of introducing, into the mixture being polymerized, optionally together with a polar activator, an effective coupling amount of a coupling agent having the formula:

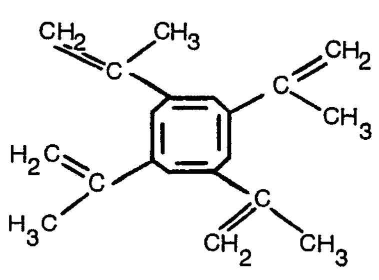

(A4)

1,3,5,7-tetra-isopropenyl-cyclo-octatetraene

said effective coupling amount, $m_{AC}$, being molarly expressed by the formula:

$$m_{AC} = \frac{m_{CA}}{f_{AC}}$$

wherein $m_{CA}$ is the number of moles of active centres in the living macroanion to be terminated, and $f_{AC}$ is the number of isopropenyl functions in the coupling agent concerned, at a temperature between 50°C and 150°C.

2. Method according to claim 1, wherein the reaction temperature for the coupling reaction is comprised between 60°C and 120°C.

3. Method according to claim 1, wherein the addition of the coupling agent is carried out either batchwise or in increments.

**Patentansprüche**

1. Verfahren zur Kupplung von lebenden Makroanionen, die sich aus der anionischen Polymerisation von Dien- und/oder vinylaromatischen Monomeren herleiten, dadurch gekennzeichnet, daß es den Schritt der Einbringung einer wirksamen kuppelnden Menge eines Kupplungsmittels der Formel

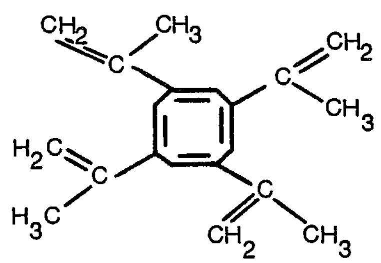

(A4)

1,3,5,7-Tetraisopropenyl-cyclooctatetraen

wahlweise zusammen mit einem polaren aktivierenden Mittel, in das zu polymerisierende Gemisch bei einer Temperatur von 50°C bis 150°C umfaßt, welche wirksame kuppelnde Menge, $m_{AC}$, durch die Formel

$$m_{AC} = \frac{m_{CA}}{f_{AC}}$$

molar ausgedrückt wird, worin $m_{CA}$ die Anzahl der Mole der aktiven Zentren im zu kuppelnden lebenden Makroanion bezeichnet und $f_{AC}$ für die Zahl der Isopropenyl-Funktionen im betreffenden Kupplungsmittel steht.

2. Verfahren nach Anspruch 1, worin die Reaktionstemperatur für die Kupplungsreaktion von 60°C bis 120°C umfaßt.

3. Verfahren nach Anspruch 1, worin die Zugabe des Kupplungsmittels entweder batchweise oder in Inkrementen durchgeführt wird.

**Revendications**

1. Procédé de terminaison de macroanions vivants dérivant de la polymérisation anionique de monomères diène- et/ou vinylaromatiques, caractérisé en ce qu'il comprend l'étape consistant à introduire, dans le mélange en polymérisation, éventuellement conjointement avec un activateur polaire, une quantité permettant un couplage efficace d'un agent de couplage répondant à la formule:

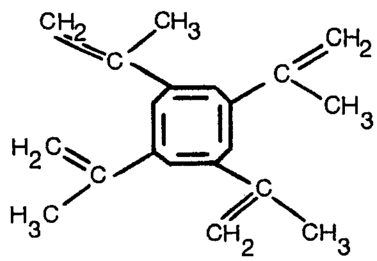

(A4)

1,3,5,7-tétra-isopropényl-cyclo-octatétraène

ladite quantité permettant un couplage efficace, $m_{AC}$, étant exprimée en moies par la formule:

$$m_{AC} = \frac{m_{CA}}{f_{AC}}$$

où $m_{CA}$ est le nombre de moies de centres actifs dans le macroanion vivant à terminer, et $f_{AC}$ est le nombre des fonctions isopropényle de l'agent de couplage concerné, à une température comprise entre 50°C et 150°C.

2. Procédé selon la revendication 1, dans lequel la température réactionnelle de la réaction de couplage est comprise entre 60°C et 120°C.

3. Procédé selon la revendication 1, dans lequel l'addition de l'agent de couplage est effectuée soit par lots séparés, soit par incréments.